**Europäisches Patentamt**

**European Patent Office**

**Office européen des brevets**

(11) Numéro de publication: **0 059 127**
**A1**

(12) ## DEMANDE DE BREVET EUROPEEN

(21) Numéro de dépôt: **82400185.3**

(22) Date de dépôt: **04.02.82**

(51) Int. Cl.³: **G 02 B 27/64**

(30) Priorité: **06.02.81 FR 8102384**

(43) Date de publication de la demande: **01.09.82**
**Bulletin 82/35**

(84) Etats contractants désignés: **AT BE CH DE FR GB IT LI LU NL SE**

(71) Demandeur: **SOCIETE D'OPTIQUE, PRECISION ELECTRONIQUE ET MECANIQUE - SOPELEM, 102 rue Chaptal, F-92300 Levallois-Perret (FR)**

(72) Inventeur: **Ragain, Jacques, 31 avenue Raspail, F-95330 Domont (FR)**
Inventeur: **Moirez, Jacques, 8 rue Emile Deslandre, F-75013 Paris (FR)**
Inventeur: **Prevost, Marc, 6 bis Avenue de Rottemburg, F-75012 Paris (FR)**

(74) Mandataire: **Dupuy, Louis et al, CREUSOT-LOIRE 15 rue Pasquier, F-75383 Paris Cedex 8 (FR)**

(54) **Dispositif de visée stabilisée à deux voies optiques.**

(57) Dispositif de visée à deux voies optiques parallèles (5, 17) comportant un premier et un deuxième réflecteurs interceptant chacun le faisceau lumineux d'une des deux voies optiques, le premier réflecteur (2) pouvant tourner autour d'un premier axe de rotation (4), le deuxième réflecteur (12) pouvant tourner autour d'un deuxième axe de rotation (13), ces deux axes étant parallèles, ces réflecteurs étant disposés à une certaine distance l'un de l'autre. Il est prévu un stabilisateur à effet gyroscopique dont la position angulaire à l'axe de sortie est maintenue dans un rapport constant par rapport à la position angulaire du prémier réflecteur, et en ce qu'un moyen est prévu (14, 15, 16) pour établir une relation angulaire constante entre les positions angulaires de ces deux réflecteurs autour de leur axe de rotation.

"Dispositif de visée stabilisée à deux voies optiques"

La présente invention concerne un dispositif de visée à deux voies optiques, notamment pour périscope.

Il existe déjà des dispositifs de visée à deux voies optiques. En particulier le brevet français n° 2.273.291 montre une tête d'observation pour un périscope comprenant deux dispositifs optiques, l'un pour l'observation diurne, l'autre pour l'observation nocturne, ces deux dispositifs optiques étant orientables simultanément de façon à ce que les deux faisceaux lumineux qu'ils reçoivent soient des faisceaux de même direction provenant donc du même lieu de l'espace.

Dans un tel dispositif, les mouvements notamment de roulis du navire entrainent des variations de l'angle de site lors de la visée, ce qui gène l'observation qui en est faite.

D'autre part, dans ce même dispositif, les deux réflecteurs interceptant les deux voies optiques sont montés sur un même axe de rotation horizontal. Cette disposition est gênante car elle impose à la tête d'observation une largeur au moins égale à la somme des largeurs des deux réflecteurs.

La présente invention vise à pallier ces deux inconvénients majeurs en prévoyant un dispositif de visée à deux voies optiques parallèles comportant un premier et un deuxième réflecteur interceptant chacun une voie optique, le premier réflecteur pouvant tourner autour d'un premier axe de rotation, le deuxième réflecteur pouvant tourner autour d'un deuxième axe de rotation, ces deux axes de rotation étant parallèles, ces réflecteurs étant disposés à une certaine distance l'un de l'autre. Il est d'autre part prévu un stabilisateur à effet gyroscopique dont la position angulaire de son axe de sortie est maintenue dans un rapport constant par rapport à la position angulaire du premier réflecteur, ainsi qu'un moyen pour établir une relation angulaire constante entre les positions angulaires de ces deux réflecteurs autour de leur axe de rotation.

Dans un mode de réalisation particulier du dispositif propre à la présente invention il est prévu que le premier réflecteur peut tourner autour d'un axe faisant un angle de 45° avec son plan de réflexion, que l'axe de sortie du stabilisateur à effet gyroscopique est dans le prolongement et est solidaire de l'axe de rotation du premier réflecteur, que le deuxième réflecteur peut tourner autour d'un axe parallèle à son plan de réflexion, et qu'il est établi entre les deux axes de rotation des deux réflecteurs une relation angulaire constante telle que le rapport de la rotation du deuxième réflecteur sur la rotation du premier est égale à un demi.

Cette disposition particulière du premier réflecteur est en effet telle que, selon un principe d'optique bien connu, une rotation alpha du rayon incident se déplaçant dans un plan perpendiculaire à l'axe de rotation du réflecteur implique pour ce réflecteur une rotation identique alpha pour conserver la même direction du rayon réfléchi. On peut dans ce cas accoupler directement le stabilisateur à inertie au premier réflecteur. Cela évite un axe supplémentaire de rotation et toute une chaîne cinématique, d'où une diminution de l'encombrement, du coût et une augmentation de la précision par l'élimination de certains jeux et frottements.

Selon un mode de réalisation particulier de la présente invention il est prévu au moins un miroir ou prisme qui intercepte le faisceau lumineux provenant du premier réflecteur et, par une simple ou double réflection, le ramène dans une direction parallèle au faisceau lumineux provenant du deuxième réflecteur.

D'autres avantages apparaîtront lors de la description détaillée qui va suivre et qui se réfère à des modes de réalisation donnés à titre d'exemples non limitatifs et représentés par les dessins annexés.

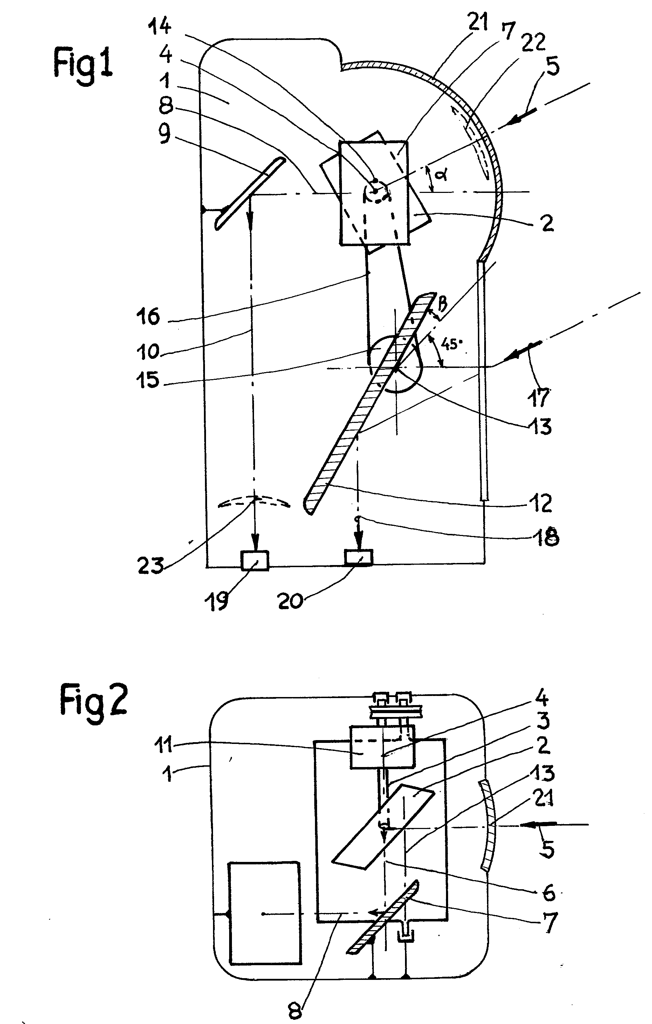

La figure 1 représente schématiquement en vue latérale un premier mode de réalisation du dispositif de visée selon l'invention.

La figure 2 est une vue de dessus du dispositif représenté en figure 1.

Dans un boîtier représenté schématiquement 1, est disposé un premier réflecteur interceptant la première voie optique constitué dans cet exemple de réalisation par un miroir 2 fixé de façon rigide à un arbre 3 disposé dans le boitier 1 de façon à pouvoir tourner sur lui-même selon un axe de rotation horizontal 4. Le plan de réflexion 2 du premier miroir fait un angle de 45° avec son arbre 3 et donc aussi avec son axe de rotation 4. Un premier faisceau lumineux 5 destiné à être observé parvient sur le miroir 2 dans une direction située dans un plan perpendiculaire à l'axe de rotation 4. Le faisceau 5 fait avec l'horizontale un angle alpha qui est l'angle de site. Le miroir 2 est alors orienté par rapport au faisceau lumineux de manière à ce que le faisceau ait une incidence de 45° avec ce miroir. Pour cela le miroir est en fait tourné de la valeur de l'angle alpha correspondant à l'angle de site. Ce premier faisceau lumineux 5 subit alors une première réflexion pour suivre un chemin 6 qui est en fait confondu avec l'axe horizontal 4 de rotation du miroir 2, ce faisceau frappe ensuite un miroir complémentaire 7 qui est relié rigidement au boitier 1. Dans cet exemple de réalisation, le plan de réflexion du miroir 7 est vertical et fait un angle de 45° avec l'axe 4. Le faisceau lumineux est alors réfléchi sur ce miroir 7 et suit un chemin 8 horizontal qui l'amène sur un autre miroir 9 qui est relié rigidement au boitier 1 et qui est dans un plan situé à 45° de la verticale de façon à renvoyer le faisceau lumineux venant du chemin 8 vers le bas selon une direction verticale 10.

Le miroir 2 est monté sur l'arbre 3 qui peut tourner dans le boitier 1 et qui est en fait confondu avec l'arbre de sortie du stabilisateur à effet gyroscopique. Ce stabilisateur 11 sert à maintenir constante l'inclinaison du miroir 2 par rapport à l'horizontale quels que soient les mouvements de rotation autour d'un axe horizontal que peut avoir le boitier 1.

Nous remarquons en effet que, si le miroir 2 garde une inclinaison constante, une rotation du boîtier 1 autour d'un axe parallèle à l'axe 4 ne perturbe pas le trajet du faisceau réfléchi 6 qui reste confondu avec l'axe 4 et qui par conséquent suit toujours le même chemin 8, 10 et donne donc une visée stable.

Un deuxième réflecteur interceptant la deuxième voie optique, constitué dans cet exemple de réalisation par un miroir 12, est situé sensiblement au-dessous du miroir 2, et est disposé dans le boitier 1 de façon à pouvoir tourner autour d'un axe 13 qui est horizontal et parallèle à l'axe 4. Ce miroir 12 comporte un plan de réflexion qui est parallèle à son axe de rotation 13. Une transmission mécanique comprenant essentiellement deux poulies 14 et 15 et une courroie 16 relie les arbres de rotation des deux miroirs 2 et 12 de manière à établir une relation angulaire constante entre ces deux miroirs. Cette relation angulaire est telle que pour une rotation alpha du miroir 2 le miroir 12 subit une rotation égale à alpha sur 2. Cela peut être réalisé par exemple en utilisant une poulie 14 dont le diamètre est la moitié du diamètre de la poulie 15.

Ce miroir 12 intercepte le deuxième faisceau lumineux 17 de la deuxième voie optique. Lorsque le miroir 2 est réglé pour un angle de site nul (faisceau 5 horizontal) et que l'appareil est vertical, le miroir 12 est alors disposé à 45° de manière à renvoyer le faisceau lumineux verticalement vers le bas en suivant le chemin 18. On s'aperçoit aisément que, pour un angle de site alpha quelconque, le rapport ½ entre la rotation des miroirs 2 et 12 provoque une réflexion des deux faisceaux lumineux 5 et 17 qui suit des chemins 10 et 18 qui restent bien parallèles entre eux dans une position fixe par rapport au boitier. Les deux dispositifs d'observation 19, 20 des voies optiques disposés sur les chemins 10 et 18 donnent bien simultanément une image stabilisée des deux voies optiques parallèles 5 et 17.

Bien sûr les moyens établissant la relation angulaire constante entre les miroirs 2 et 12 réalisés mécaniquement peuvent être faits par tout autre procédé tel que recopie électrique, asservissement de position, etc ...

Certains aménagements secondaires peuvent être adaptés à ce dispositif. On peut par exemple disposer d'un hublot sphérique 21 centré autour du miroir 2.

On peut aussi monter entre le miroir et le hublot, sur le trajet du faisceau, une lentille correctrice 22 pour corriger les déformations optiques dues à ce hublot. Il est à remarquer que la disposition particulière du miroir 2 disposé à 45° par rapport à son axe de rotation et qui tourne du même angle alpha que l'angle de site fait que la lentille 22 peut être montée fixe par rapport à ce miroir 2. Pour obtenir cette correction optique il est possible aussi, au lieu de disposer cette lentille 22, de disposer une lentille correctrice 23 sur le chemin fixe 10, ce qui est alors encore plus simple à réaliser puisque cette lentille 23 est alors fixe par rapport au boitier 1.

Il est bien entendu que l'on peut sans sortir du cadre de l'invention imaginer des variantes et des perfectionnements de détails et de même envisager l'emploi de moyens équivalents.

0059127

REVENDICATIONS

1.- Dispositif de visée à deux voies optiques parallèles comportant un premier (2) et un deuxième (12) réflecteurs interceptant chacun le faisceau lumineux d'une des deux voies optiques (5, 17), le premier réflecteur (2) pouvant tourner autour d'un premier axe de rotation (4), le deuxième réflecteur (12) pouvant tourner autour d'un deuxième axe de rotation (13), ces deux axes étant parallèles, caractérisé en ce que ces deux réflecteurs sont disposés à une certaine distance l'un de l'autre, en ce qu'il est prévu un stabilisateur à effet gyroscopique (11) dont la position angulaire de son axe de sortie est maintenue dans un rapport constant par rapport à la position angulaire du premier réflecteur (2), et en ce qu'un moyen (16) est prévu pour établir une relation angulaire constante entre les positions angulaires de ces deux réflecteurs (2, 12) autour de leur axe de rotation.

2.- Dispositif de visée à deux voies optiques parallèles selon la revendication 1, caractérisé en ce que le plan de réflexion du premier réflecteur (2) fait avec son axe de rotation un angle de 45°, en ce que l'axe de sortie (4) du stabilisateur à effet gyroscopique (11) est dans le prolongement et est solidaire de l'axe de rotation (4) du premier réflecteur (2), en ce que le deuxième réflecteur (12) a son plan de réflexion parallèle à son axe de rotation et en ce qu'il est établi entre les deux axes de rotation (4,13) des deux réflecteurs une relation angulaire constante telle que le rapport de la rotation du deuxième réflecteur (12) sur la rotation du premier (4) est égale à $\frac{1}{2}$.

3.- Dispositif de visée à deux voies optiques parallèles monté sur une tête d'observation pour un périscope selon la revendication 2, caractérisé en ce qu'il comporte en outre un hublot sphérique (21) centré autour du premier réflecteur et une lentille correctrice (22 ou 23) placée soit entre le premier réflecteur et le hublot sur le chemin du faisceau lumineux dans une position fixe par rapport à ce réflecteur (22), soit placée sur le chemin du faisceau réfléchi par ce premier réflecteur dans une position fixe par rapport au boitier de la tête d'observation (23).

Fig1

Fig2

0059127

1/1

0059127

**Office européen des brevets**

**RAPPORT DE RECHERCHE EUROPEENNE**

Numéro de la demande

EP 82 40 0185

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| X | FR - A - 2 254 037 (S.F.I.M.)  <br> * page 5, lignes 19-28; revendications; figure 4 * | 1,3 | G 02 B 27/64 |
| A | FR - A - 2 461 230 (WEGMANN)  <br> * revendications; figures * | 1,2 | |
| A | US - A - 4 010 365 (F.J. MEYERS)  <br> * colonne 2, lignes 36-58; figure 3 * | 3 | **DOMAINES TECHNIQUES RECHERCHES (Int. Cl. 3)** <br><br> G 02 B 27/64 |
| A | FR - A - 2 337 326 (S.E.R.E.)  <br> * revendications; figures * | 1 | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X  Le présent rapport de recherche a été établi pour toutes les revendications

| Lieu de la recherche | Date d'achèvement de la recherche | Examinateur |
|---|---|---|
| La Haye | 11-05-1982 | PFÄHLER |

OEB Form 1503.1  06.78